# EUROPEAN PATENT APPLICATION

(11) **EP 4 641 815 A1**
(43) Date of publication of application: **29.10.2025**
(21) Application number: 23906542.8
(22) Date of filing: 16.11.2023
(51) Int. Cl.: H01M 50/536, H01G 11/70, H01G 11/74, H01G 11/84, H01M 10/04, H01M 10/0587, H01M 50/533, H01M 50/538

(54) **METHOD FOR PRODUCING POWER STORAGE DEVICE, AND POWER STORAGE DEVICE**

(30) Priority: 19.12.2022 JP 2022202136
(71) Applicant: Panasonic Energy Co., Ltd., Osaka 570-8511 (JP)
(72) Inventor: HIROSE, Takayuki, Kadoma-shi, Osaka 571-0057 (JP); KUMAZAWA, Seiji, Kadoma-shi, Osaka 571-0057 (JP); TSUJI, Yuta, Kadoma-shi, Osaka 571-0057 (JP)
(74) Representative: Novagraaf International SA
(86) International application number: PCT/JP2023/041184
(87) International publication number: WO 2024/135172

(57) **Abstract**

This method for producing a power storage device comprises a process in which: an electrode group 2 having a structure in which a plurality of exposed portions 12a of a collector 12 are aligned is prepared; and the plurality of aligned exposed portions 12a and a collector plate 20, 22 are brought into contact with each other and a scan region 58 of the collector plate 20, 22 is scanned with laser light L from one end 58a to the other end 58b, thereby bonding the plurality of exposed portions 12a to the collector plate 20, 22. The scan region 58 is thicker at the other end 58b than at the one end 58a, and the thickness of the scan region 58 is increased from the one end 58a side toward the other end 58b side continuously or in stages at least in a section of the scan region from the one end 58a to the other end 58b.

## Description

### TECHNICAL FIELD

The present invention relates to a method of manufacturing a power storage apparatus and to a power storage apparatus.

### BACKGROUND ART

In the related art, a power storage apparatus in which an electrode group is housed in an outer can is known. In a power storage apparatus like this, a current collector plate is welded to the end of the electrode group (see, for example, Patent Literature 1).

### RELATED-ART LITERATURE

### PATENT LITERATURE

[Patent Literature 1] JP2008-166030

### SUMMARY OF INVENTION

### TECHNICAL PROBLEM

We have made an extensive study on power storage apparatuses in which an electrode group and a current collector plate are joined and have found that there is room for improvement in the quality of conventional power storage apparatuses.

The present disclosure addresses the issue described above, and a purpose thereof is to provide a technology of improving the quality of power storage apparatuses.

### SOLUTION TO PROBLEM

An embodiment of the present disclosure relates to a method of manufacturing a power storage apparatus. The method of manufacturing includes: preparing an electrode group including a current collector in which an electrode active material layer is stacked, the electrode group having a structure in which a plurality of exposed portions of the current collector that are not coated with the electrode active material layer are arranged; and bringing the plurality of exposed portions arranged into contact with a current collector plate and irradiating a scanned region, in the current collector plate, extending in a direction of arrangement of the exposed portions with a laser beam from one end to another end to join the plurality of exposed portions to the current collector plate. The scanned region is thicker at the other end than at the one end, and a thickness of the scanned region increases continuously or stepwise from the one end to the other end in at least a section between the one end and the other end.

Another embodiment of the present disclosure relates to a power storage apparatus. The power storage apparatus includes: an electrode group including a current collector in which an electrode active material layer is stacked; and a current collector plate joined to the current collector. The electrode group has a structure in which a plurality of exposed portions of the current collector that are not coated with the electrode active material layer are arranged, and the plurality of exposed portions arranged are joined to the current collector plate. A region, in the current collector plate, extending in a direction of arrangement of the exposed portions, in which region the exposed portions are joined, is thicker at the other end than at the one end, and a thickness of the region increases continuously or stepwise from the one end to the other end in at least a section between the one end and the other end.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, the quality of a power storage apparatus can be improved.

### BRIEF DESCRIPTION OF DRAWINGS

[Fig. 1] Fig. 1 is a cross-sectional view of a power storage apparatus according to the embodiment.
[Fig. 2] Fig. 2A is an exploded perspective view of an electrode group. Fig. 2B is a plan view of the electrode group to which a first current collector plate is joined.
[Fig. 3] Figs. 3A-3C show the steps of joining the current collector and the current collector plate.

### DESCRIPTION OF EMBODIMENTS

Hereinafter, the present disclosure will be described based on a preferred embodiment with reference to the accompanying drawings. The embodiment is not intended to limit the scope of the present disclosure but exemplify the present disclosure. Not all of the features and the combinations thereof described in the embodiment are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

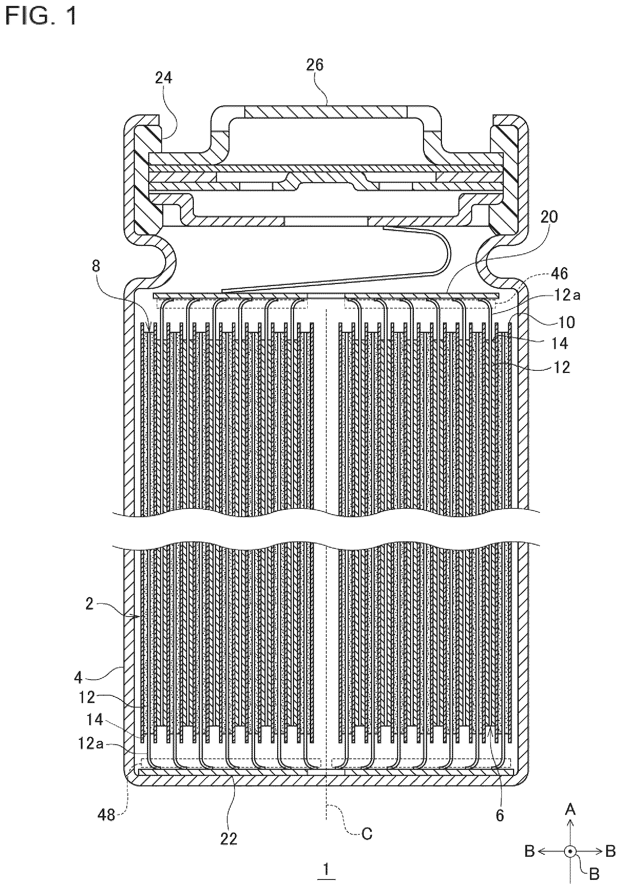

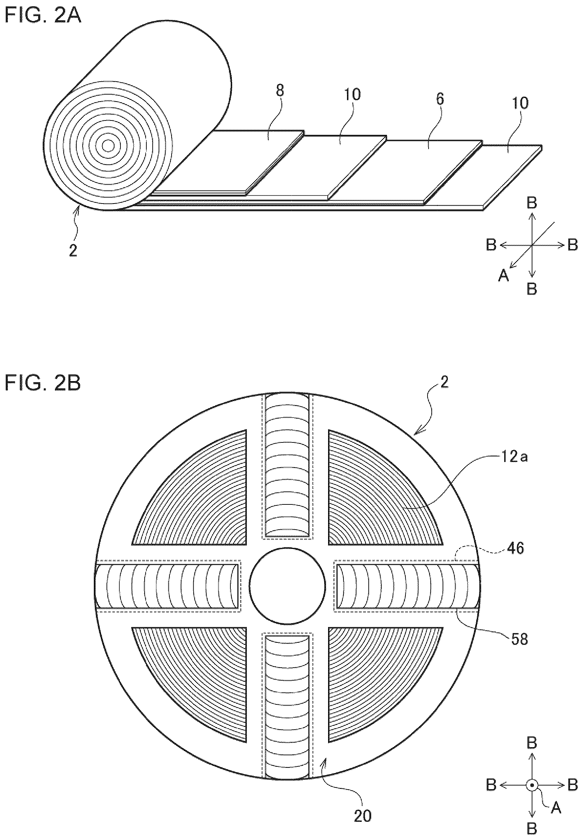

Fig. 1 is a cross-sectional view of a power storage apparatus 1 according to the embodiment. Fig. 2A is an exploded perspective view of an electrode group 2. Fig. 2B is a plan view of the electrode group 2 to which a first current collector plate 20 is joined. In Fig. 1, the shapes of the first current collector plate 20 and the second current collector plate 22 are simplified, and the illustration of the change in the thickness is omitted. In Fig. 2A, the illustration of a current collector 12 and an electrode active material layer 14 in distinction from one another is omitted.

The power storage apparatus 1 is a rechargeable secondary battery exemplified by a lithium ion battery, a nickel hydride battery, a nickel-cadmium battery, etc. or a capacitor like an electric double layer capacitor. The power storage apparatus 1 has a structure in which the electrode group 2 is stored in an outer can 4 along with an electrolytic solution (not shown) and the first current collector plate 20 and a second current collector plate 22. The electrode group 2 is cylindrical in shape by way of one example and has a winding structure in which a belt-like first electrode plate 6 and a belt-like second electrode plate 8 are stacked, sandwiching a belt-like separator 10, and are wound in a spiral shape. In the embodiment, the first electrode plate 6 is the positive electrode plate and the second electrode plate 8 is the negative electrode plate. The first electrode plate 6 may be the negative electrode plate, and the second electrode plate 8 may be the positive electrode plate. The separator 10 is formed by a microporous film made of, by way of one example, a polypropylene resin or the like.

The first electrode plate 6 and the second electrode plate 8 include the current collector 12 and an electrode active material layer 14 stacked on the current collector 12. The current collector 12 and the electrode active material layer 14 are also belt-like and are wound in a spiral shape. In the case of a general lithium ion secondary battery, the current collector 12 is comprised of an aluminum foil or the like when it is a positive electrode and is comprised of a copper foil or the like when it is a negative electrode. The electrode active material layer 14 can be formed by applying an electrode mixture material to the surface of the current collector 12 by a known coating apparatus and drying and rolling the material. The electrode mixture material is obtained by kneading materials including an electrode active material, a binder, a conductive material, etc. in a dispersion medium and uniformly dispersing the materials. In the case of a general lithium ion secondary battery, the electrode active material is lithium cobalt oxide, lithium iron phosphate, etc. in the case of a positive electrode and is graphite, etc. in the case of a negative electrode.

The first electrode plate 6 and the second electrode plate 8 have an exposed portion 12a of the current collector 12 at the end of the plate in the width direction A. The width direction A is a direction intersecting the longitudinal direction of the belt. The exposed portion 12a included in the first electrode plate 6 and the exposed portion 12a included in the second electrode plate 8 protrude in mutually opposite directions in the width direction A. The exposed portion 12a is a portion of the current collector 12 that is not coated with the electrode active material layer 14.

As described above, the electrode group 2 has a structure in which the first electrode plate 6 and the second electrode plate 8 are wound. For this reason, the end of the current collector 12 in the width direction A, i.e., a plurality of exposed portions 12a are arranged in the radial direction B of the electrode group 2. In other words, the electrode group 2 has a structure in which the exposed portions 12a are stacked. The electrode group 2 may have a structure in which pieces of the first electrode plate 6 and pieces of the second electrode plate 8 are stacked in a plurality of layers, sandwiching the separator 10.

The electrode group 2 by way of one example has a first joined region 46 and a second joined region 48 in which the plurality of exposed portions 12a arranged in the radial direction B are bent in the radial direction B. The first joined region 46 and the second joined region 48 are at opposite positions in the width direction A. The plurality of exposed portions 12a included in the first joined region 46 are the exposed portions 12a of the current collector 12 provided in the first electrode plate 6. The plurality of exposed portions 12a included in the second joined region 48 are the exposed portions 12a of the current collector 12 provided in the second electrode plate 8.

For example, each exposed portion 12a is bent toward the center of winding C of the electrode group 2, i.e., bent inward in the radial direction B. The center of winding C is, for example, the geometric center of the outline of the electrode group 2 seen in the width direction A, i.e., the geometric center of the shape of the electrode group 2 projected in the width direction A. Further, in the electrode group 2 by way of one example, a plurality of first joined regions 46 and a plurality of second joined regions 48 are respectively arranged at predetermined intervals in the circumferential direction of the electrode group 2. In the embodiment, four first joined regions 46 are arranged at intervals of 90° in the circumferential direction. Further, four second joined regions 48 are arranged at intervals of 90° in the circumferential direction.

The first current collector plate 20 and the second current collector plate 22 are arranged so as to sandwich the electrode group 2 in the width direction A. The first current collector plate 20 is disposed on the side of first joined region 46. The second current collector plate 22 is disposed on the side of the second joined region 48.

The first current collector plate 20 is made of, for example, aluminum or the like. The plurality of exposed portions 12a bent in the first joined region 46 are placed in surface contact with the first current collector plate 20. By bending each exposed portion 12a, the contact area between each exposed portion 12a and the first current collector plate 20 increases. Laser welding or the like is performed at a position where the first joined region 46 and the first current collector plate 20 overlap. Thereby, the exposed portion 12a of each winding layer and the first current collector plate 20 are joined to each other.

The second current collector plate 22 is made of, for example, nickel-plated iron, etc. The plurality of exposed portions 12a bent in the second joined region 48 are placed in surface contact with the second current collector plate 22. By bending each exposed portion 12a, the contact area between each exposed portion 12a and the second current collector plate 22 increases. Laser welding or the like is performed at a position where the second joined region 48 and the second current collector plate 22 overlap. Thereby, the exposed portion 12a of each winding layer and the second current collector plate 22 are joined to each other.

The electrode group 2 to which the first current collector plate 20 and the second current collector plate 22 are joined is housed in the bottomed cylindrical outer can 4 along with the electrolytic solution. The outer can 4 is made of, for example, copper, nickel, iron, aluminum, an alloy thereof, or the like. The second current collector plate 22 is joined to the inner bottom surface of the outer can 4 by welding or the like. The first current collector plate 20 is joined to a sealing plate 26 made of the same metal as the outer can 4 by welding or the like. The sealing plate 26 is fitted into the opening of the outer can 4 via an insulating gasket 24. Thereby, the electrode group 2 and the electrolytic solution are sealed in the outer can 4.

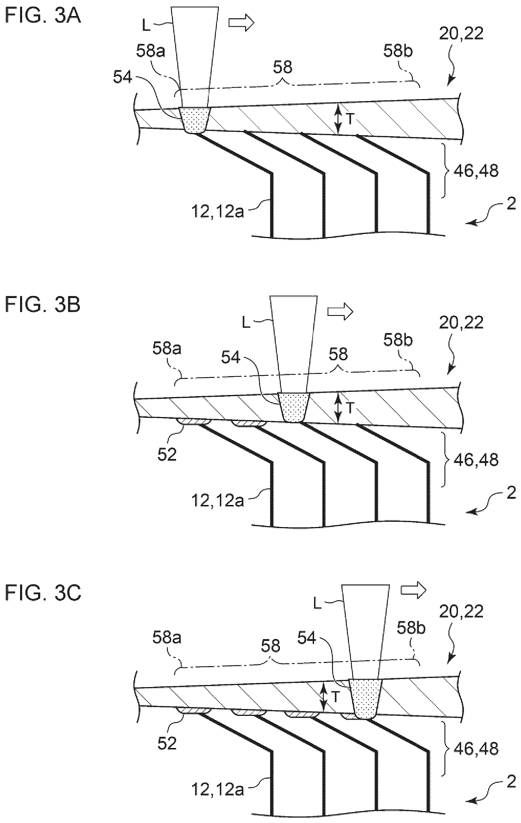

A description will now be given of a method of manufacturing the power storage apparatus 1. Figs. 3A-3C show the steps of joining the current collector 12 and the current collector plate. Figs. 3A-3C show only some of the exposed portions 12a. Further, only a part of the current collector plate is shown.

First, as shown in Fig. 2A, the first electrode plate 6, the second electrode plate 8, and the separators 10, which are belt-like, are prepared. Then, the separator 10, the first electrode plate 6, the separator 10, and the second electrode plate 8 are stacked in this order. The stacked product thus obtained is wound in a spiral shape to form the winding electrode group 2.

Then, the electrode group 2 is set in a processing machine (not shown). Further, the end of the current collector 12 provided in the first electrode plate 6 is bent by the processing machine in the radial direction B. This forms the first joined region 46 including the plurality of exposed portions 12a bent in the radial direction B. After that, the first current collector plate 20 is pressed against the first joined region 46. The plurality of exposed portions 12a arranged in the first joined region 46 and the first current collector plate 20 are joined to each other by laser welding.

Specifically, as shown in Fig. 3A, the laser light L is radiated from the side of the first current collector plate 20 in a state in which the plurality of exposed portions 12a arranged and the first current collector plate 20 are in contact. One end 58a of a scanned region 58 in the first current collector plate 20 is irradiated with the laser beam L. The scanned region 58 overlaps the plurality of exposed portions 12a arranged and extends in the direction of arrangement of the exposed portions 12a, i.e., the radial direction B of the electrode group 2. In the embodiment, four scanned regions 58 extend radially from the center of winding C (see Fig. 2B). Each scanned region 58 is arranged to overlap the first joined region 46 and not to overlap the center of winding C in the width direction A. Therefore, the ends of each scanned region 58 are displaced from the center of winding C in the same radial direction of the electrode group 2.

A molten portion 54 (molten pool) is formed by irradiation of the first current collector plate 20 with the laser beam L. Then, as shown in Figs. 3B and 3C, the molten portion 54 moves from the one end 58a to another end 58b in the scanned region 58 according to the displacement of the irradiation position of the laser beam L. The molten portion 54 is substantially composed only of the molten material from the first current collector plate 20 at a position where the current collector 12 does not exist and is composed of the molten material from the first current collector plate 20 and the molten material from the current collector 12 at the position where the current collector 12 is present. As the scanned region 58 is scanned with the laser beam L from the one end 58a to the other end 58b, a joined portion 52 between each exposed portion 12a and the first current collector plate 20 is formed. As a result, the plurality of exposed portions 12a are joined to the scanned region 58 of the first current collector plate 20.

When the entirety of the scanned region 58 is scanned by the laser beam L, the first current collector plate 20 is completely joined to the electrode group 2. Subsequently, the end of the current collector 12 provided in the second electrode plate 8 is bent by a processing machine. This forms a second joined region 48 including the plurality of exposed portions 12a bent in the radial direction B. After that, the second current collector plate 22 is pressed against the second joined region 48. The plurality of exposed portions 12a arranged in the second joined region 48 and the second current collector plate 22 are joined by laser welding through a process similar to that of joining the first current collector plate 20 to the electrode group 2. Thereby, each exposed portion 12a is joined to the second current collector plate 22.

The electrode group 2 to which the first current collector plate 20 and the second current collector plate 22 are joined is housed in the outer can 4 along with the electrolytic solution. Then, processes like the joint of the second current collector plate 22 to the outer can 4, joint of the first current collector plate 20 to the sealing plate 26, fitting of the sealing plate 26 in the opening of the outer can 4, etc. are performed. Thereby, the power storage apparatus 1 is obtained. Then, the sequence of steps such as the joint of respective parts, housing in the outer can 4, and fitting of the sealing plate 26 can be modified as appropriate. In the case a liquid pouring port is provided in the sealing plate 26, etc., for example, the electrolytic solution may be poured into the outer can 4 after the sealing plate 26 is fitted in the opening of the outer can 4. Alternatively, the first joined region 46 and the second joined region 48 may be formed first, the first current collector plate 20 and the second current collector plate 22 are then pressed against the electrode group 2, and then the first current collector plate 20 and the second current collector plate 22 may be irradiated with the laser beam L.

As a result of intensive examination of the process of joining the current collector 12 and the current collector plate, we have found that the quality of the power storage apparatus 1 can be improved by suitably designing the current collector plate. In other words, the amount of heat input to the current collector plate, in other words, the amount of heat derived from the laser beam L given to each welded portion of the current collector plate can generally differ between the start end where laser welding is started and the terminal end of laser welding. Specifically, the heat accumulated in the current collector plate increases as the irradiation time of the laser beam L increases, and so the amount of heat given tends to increase at the terminal end than at the start end. When the current collector plate having a uniform thickness is scanned with the laser beam L of a constant intensity at a constant scanning speed, therefore, a difference in the state of the molten portion 54 is created between the start end and the terminal end, and so the welding quality may vary in the entire the scanned region 58.

Further, the intensity or scanning speed of the laser beam L may be changed with the movement of the laser beam L as a method of suppressing the variation in welding quality in the entire scanned region 58, thereby adjusting the power density of the laser beam L input to the current collector plate. According to this method, however, the flow of the molten material in the molten portion 54 may be disturbed as the intensity or scanning speed of the laser beam L is switched with the result that the spatter may occur, or the laser beam L may penetrate the current collector plate.

In the embodiment, on the other hand, the thickness T of the scanned region 58 differs between the side of the one end 58a and the side of the other end 58b as shown in Figs. 3A-3C. The thickness T of the scanned region 58 in the embodiment is the dimension of the scanned region 58 in the width direction A or in the direction of arrangement of the electrode group and the current collector plate. Further, the thickness T of the scanned region 58 is an average thickness, which is, for example, an average value of the thickness at 10 arbitrary points. For example, the thickness T at the one end 58a is an average value of the thickness at 10 points lined up in a direction orthogonal to the scanning direction of the laser beam L at the one end 58a.

Specifically, the scanned region 58 is thicker at the other end 58b located at the terminal end of laser welding than at the one end 58a located at the start end of laser welding. Further, the thickness T of the scanned region 58 increases continuously or stepwise from the one end 58a to the other end 58b in at least a section between the one end 58a and the other end 58b.

In the scanned region 58 shown in Figs. 3A-3C, the thickness T continuously increases from the one end 58a to the other end 58b by way of example. The mode of variation of the thickness T of the scanned region 58 is not limited to this. For example, the thickness T may change only in one step or may change in a plurality of steps. Further, the thickness T may change continuously or stepwise in one or more sections in the scanned region 58, and the thickness T may be uniform in the other one or more sections. The thickness T of the scanned region 58 can be appropriately set according to the composition of the current collector plate, the intensity or scanning speed of the laser beam L, etc. based on experiments and simulations by the designer. For example, the thickness T of each section in the scanned region 58 is adjusted within a range of 0.1 mm or more and 0.8 mm or less.

By making the thickness T of the scanned region 58 smaller at the start end of laser welding and larger at the terminal end of laser welding, the amount of heat given can be easily uniformized in the entire scanned region 58. This makes the welding quality uniform in the entire scanned region 58 while keeping the intensity or scanning speed of the laser beam L constant. It also suppresses the generation of spatter, etc. caused by a disturbance in the flow of the molten material. Accordingly, the quality of the power storage apparatus 1 can be improved.

Preferably, the scanned region 58 is scanned from the one end 58a to the other end 58b with the laser beam L of the constant intensity. More preferably, the scanned region 58 is scanned from the one end 58a to the other end 58b with the laser beam L of a constant intensity and a constant scanning speed. As a result, the generation of spatter, etc. caused by a disturbance in the flow of the molten material can be suppressed, and the quality of the power storage apparatus 1 can be improved. It also prevents control of the laser beam L from becoming complicated.

The other end 58b of the scanned region 58 may be located closer to the center of winding C of the electrode group 2 than the one end 58a. In other words, the section of the scanned region 58 closer to the center of the electrode group 2 may be thick, and the section closer to the outer part of the electrode group 2 may be thin. In this case, each scanned region 58 is scanned with the laser beam L from outside the electrode group 2 toward the center of winding C. In general, the current is collected from outside the electrode group 2 toward the center of winding C in the power storage apparatus 1. Therefore, the electrical resistance of the portion where more electricity is collected than elsewhere can be reduced by making the portion in the scanned region 58 toward the center of winding C thicker than toward the outer part. Thereby, heat generation associated with current collection can be suppressed, or the energy efficiency of the power storage apparatus 1 can be improved. Accordingly, the quality of the power storage apparatus 1 can be improved.

Further, the other end 58b of the scanned region 58 may be located farther from the center of winding C of the electrode group 2 than the one end 58a. In other words, the section in the scanned region 58 close to the outer part of the electrode group 2 may be thick, and the section close to the center of the electrode group 2 may be thin. In this case, each scanned region 58 is scanned with laser beam L from the side of the center of winding C of the electrode group 2 toward the outer part. When an external force is applied during the manufacturing process, the transportation process, or during use of the power storage apparatus 1, the force (torque) in the circumferential direction or the winding direction tends to be applied to the outer part of the electrode group 2. Further, since the scanned region 58 extends in the radial direction B, the electrode group 2 tends to be more vulnerable to the force in the circumferential direction than the force in the radial direction. Further, the thicker the current collector plate, the higher the strength of joint between the current collector plate and the exposed portion 12a. Therefore, the torque intensity of the electrode group 2 can be increased by making the outer part of the scanned region 58 thicker than the part toward the center of winding C. Accordingly, the quality of the power storage apparatus 1 can be improved.

The embodiment of the present disclosure has been described above in detail. The embodiment described above is merely a specific example of practicing the present disclosure. The details of the embodiments shall not be construed as limiting the technical scope of the present disclosure. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of constituting elements included in the respective embodiments is also useful as an embodiment of the present disclosure. Hatching in the cross section in the drawings should not be construed as limiting the material of the hatched object.

The embodiments may be defined by the following items.

### [Item 1]

A method of manufacturing a power storage apparatus (1) including:
preparing an electrode group (2) including a current collector (12) in which an electrode active material layer (14) is stacked, the electrode group (2) having a structure in which a plurality of exposed portions (12a) of the current collector (12) that are not coated with the electrode active material layer (14) are arranged; and
bringing the plurality of exposed portions (12a) arranged into contact with a current collector plate (20, 22) and irradiating a scanned region (58), in the current collector plate (20, 22), extending in a direction of arrangement of the exposed portions (12a) with a laser beam (L) from one end (58a) to another end (58b) to join the plurality of exposed portions (12) to the current collector plate (20, 22),
wherein the scanned region (58) is thicker at the other end (58b) than at the one end (58a), and a thickness (T) of the scanned region (58) increases continuously or stepwise from the one end (58a) to the other end (58b) in at least a section between the one end (58a) and the other end (58b).

### [Item 2]

The method of manufacturing a power storage apparatus (1) according to Item 1,
wherein the electrode group (2) has a winding structure in which the current collector (12) that is belt-like is wound, and
wherein the other end (58b) is located closer to a center of winding (C) of the electrode group (2) than the one end (58a).

### [Item 3]

The method of manufacturing a power storage apparatus (1) according to Item 1,
wherein the electrode group (2) has a winding structure in which the current collector (12) that is belt-like is wound, and
wherein the other end (58b) is located farther from a center of winding (C) of the electrode group (2) than the one end (58a).

### [Item 4]

The method of manufacturing a power storage apparatus (1) according to any one of Items 1 through 3, including:
scanning the scanned region (58) with the laser beam (L) of a constant intensity from the one end (58a) to the other end (58b).

### [Item 5]

A power storage apparatus (1) including:
an electrode group (2) including a current collector (12) in which an electrode active material layer (14) is stacked; and
a current collector plate (20, 22) joined to the current collector (12),
wherein the electrode group (2) has a structure in which a plurality of exposed portions (12a) of the current collector (12) that are not coated with the electrode active material layer (14) are arranged, and the plurality of exposed portions (12a) arranged are joined to the current collector plate (20, 22), and
wherein a region (58), in the current collector plate (20, 22), extending in a direction of arrangement of the exposed portions (12a), in which region the exposed portions (12a) are joined, is thicker at the other end (58b) than at the one end (58a), and a thickness (T) of the region (58) increases continuously or stepwise from the one end (58a) to the other end (58b) in at least a section between the one end (58a) and the other end (58b).

### [Item 6]

The power storage apparatus (1) according to Item 5,
wherein the electrode group (2) has a winding structure in which the current collector (12) that is belt-like is wound, and
wherein the other end (58b) is located closer to a center of winding (C) of the electrode group (2) than the one end (58a).

### [Item 7]

The power storage apparatus (1) according to Item 5,
wherein the electrode group (2) has a winding structure in which the current collector (12) that is belt-like is wound, and
wherein the other end (58b) is located farther from a center of winding (C) of the electrode group (2) than the one end (58a).

### INDUSTRIAL APPLICABILITY

The present disclosure is applicable to a method of manufacturing a power storage apparatus and to a power storage apparatus.

### REFERENCE SIGNS LIST

1 power storage apparatus, 2 electrode group, 12 current collector, 12a exposed portion, 14 electrode active material layer, 20 first current collector plate, 22 second current collector plate, 58 scanned region, 58a one end, 58b other end, C center of winding, L laser beam

## Claims

1. A method of manufacturing a power storage apparatus comprising:
preparing an electrode group including a current collector in which an electrode active material layer is stacked, the electrode group having a structure in which a plurality of exposed portions of the current collector that are not coated with the electrode active material layer are arranged; and
bringing the plurality of exposed portions arranged into contact with a current collector plate and irradiating a scanned region, in the current collector plate, extending in a direction of arrangement of the exposed portions with a laser beam from one end to another end to join the plurality of exposed portions to the current collector plate,
wherein the scanned region is thicker at the other end than at the one end, and a thickness of the scanned region increases continuously or stepwise from the one end to the other end in at least a section between the one end and the other end.

2. The method of manufacturing a power storage apparatus according to Claim 1,
wherein the electrode group has a winding structure in which the current collector that is belt-like is wound, and
wherein the other end is located closer to a center of winding of the electrode group than the one end.

3. The method of manufacturing a power storage apparatus according to Claim 1,
wherein the electrode group has a winding structure in which the current collector that is belt-like is wound, and
wherein the other end is located farther from a center of winding of the electrode group than the one end.

4. The method of manufacturing a power storage apparatus according to any one of Claims 1 through 3, comprising:
scanning the scanned region with the laser beam of a constant intensity from the one end to the other end.

5. A power storage apparatus comprising:
an electrode group including a current collector in which an electrode active material layer is stacked; and
a current collector plate joined to the current collector,
wherein the electrode group has a structure in which a plurality of exposed portions of the current collector that are not coated with the electrode active material layer are arranged, and the plurality of exposed portions arranged are joined to the current collector plate, and
wherein a region, in the current collector plate, extending in a direction of arrangement of the exposed portions, in which region the exposed portions are joined, is thicker at the other end than at the one end, and a thickness of the region increases continuously or stepwise from the one end to the other end in at least a section between the one end and the other end.

6. The power storage apparatus according to Claim 5,
wherein the electrode group has a winding structure in which the current collector that is belt-like is wound, and
wherein the other end is located closer to a center of winding of the electrode group than the one end.

7. The power storage apparatus according to Claim 5,
wherein the electrode group has a winding structure in which the current collector that is belt-like is wound, and
wherein the other end is located farther from a center of winding of the electrode group than the one end.
